# FASCICULE DE BREVET EUROPEEN

(11) **EP 1 654 448 B1**
(45) Date de publication et mention de la délivrance du brevet: **05.03.2008**
(21) Numéro de dépôt: 04786247.9
(22) Date de dépôt: 02.08.2004
(51) Int. Cl.: F02B 37/013, F02B 37/12, F02B 37/18, F02D 23/00, F01N 3/00

(54) **MOTEUR SURALIMENTE COMPRENANT AU MOINS DEUX ETAGES DE TURBOCOMPRESSION**
AUFGELADENER MOTOR MIT MINDESTENS ZWEI TURBOLADERSTUFEN
SUPERCHARGED ENGINE COMPRISING AT LEAST TWO TURBOCHARGER STAGES

(30) Priorité: 08.08.2003 FR 0309763
(43) Date de publication de la demande: 10.05.2006
(73) Titulaire: LE MOTEUR MODERNE, 91120 Palaiseau (FR)
(72) Inventeur: TISSOT, Jean-François, F-77570 Mondreville (FR)
(74) Mandataire: Lemoine, Robert
(86) Numéro de dépôt international: PCT/FR2004/002072
(87) Numéro de publication internationale: WO 2005/019618

(56) Documents cités:
- EP-A- 0 334 206
- EP-A- 1 275 832
- US-A- 3 906 729
- US-B1- 6 378 308
- PATENT ABSTRACTS OF JAPAN vol. 010, no. 388 (M-549), 25 décembre 1986 (1986-12-25) & JP 61 178519 A (NISSAN MOTOR CO LTD), 11 août 1986 (1986-08-11)
- PATENT ABSTRACTS OF JAPAN vol. 009, no. 168 (M-396), 13 juillet 1985 (1985-07-13) & JP 60 040728 A (FUJI JUKOGYO KK), 4 mars 1985 (1985-03-04)

## Description

La présente invention concerne un moteur suralimenté comprenant plusieurs cylindres, au moins deux étages de turbocompression comportant respectivement une turbine haute pression et une turbine basse pression montées en série, et des conduits pour transférer dans la turbine haute pression les gaz d'échappement provenant des cylindres, la turbine haute pression comportant une entrée reliée aux conduits.

La présence de plusieurs étages de turbocompression sur les moteurs suralimentés permet avant tout d'augmenter la pression de suralimentation.

La suralimentation à plusieurs étages en série pose néanmoins des problèmes lorsque les moteurs fonctionnent à bas régime ou en régime transitoire. En effet, les moteurs à plusieurs étages comportent des conduits d'admission et d'échappement dont les volumes sont sensiblement plus grands que ceux des moteurs suralimentés à un seul étage et l'inertie du turbocompresseur basse pression est généralement élevée par rapport à la puissance disponible dans les gaz d'échappement traversant la turbine basse pression.

Les moteurs comportant plusieurs étages de turbocompression sont de ce fait défavorisés en régime transitoire par rapport aux moteurs qui n'ont qu'un seul étage.

Par ailleurs, lorsque les moteurs suralimentés par deux étages de turbocompression ont une cylindrée réduite et que les turbocompresseurs créent une faible pression de suralimentation à bas régime, le couple disponible est généralement inférieur à celui fourni par un moteur de plus grosse cylindrée à un seul étage.

US 6 378 308 décrit des moteurs suralimentés comprenant deux étages de turbocompression comportant respectivement une turbine haute pression et une turbine basse pression montées en série.

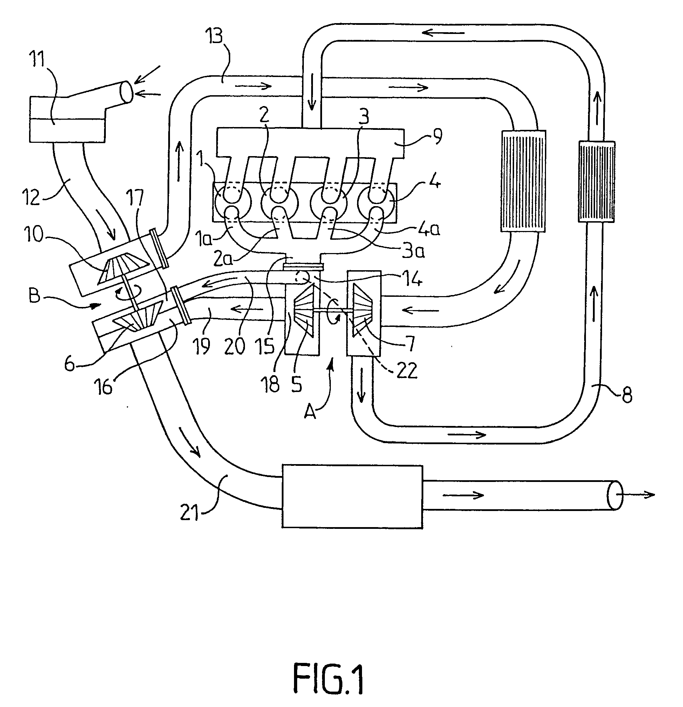

La turbine basse pression des moteurs représentés sur les figures 1a et 1b comporte une entrée unique recevant le débit total du moteur, quel que soit le mode de fonctionnement de celui-ci.

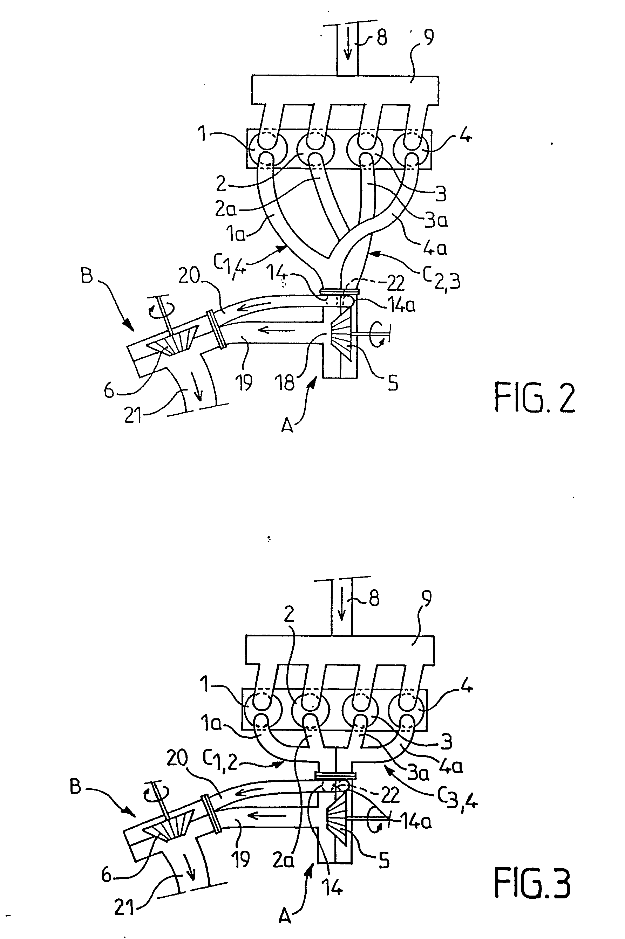

La turbine basse pression du moteur représenté sur la figure 2 comporte deux entrées, mais la totalité du débit du moteur ne peut circuler dans une seule de ces entrées.

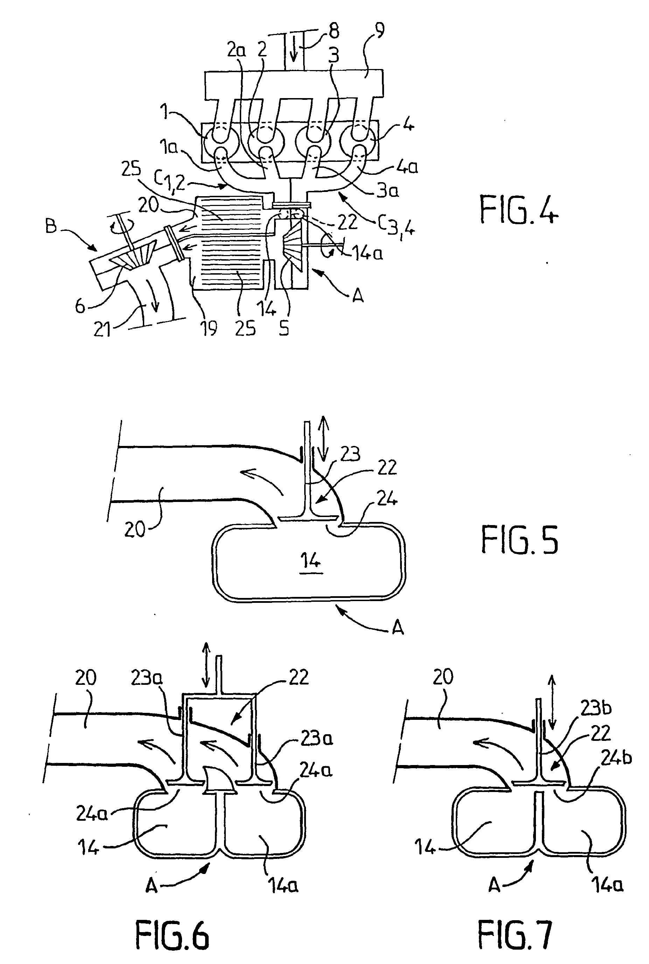

La turbine basse pression du moteur représenté sur la figure 4 comporte une entrée unique reliée à deux canaux issus de deux collecteurs d'échappement différents.

Les différents moteurs décrits dans US 6 378 308 ont toutefois un rendement qui n'est pas optimum sur leur plage d'utilisation qui s'étend d'un fonctionnement à bas régime et/ou à faible charge à un fonctionnement à haut régime et/ou à charge élevée.

La présente invention se propose d'apporter une solution à ce problème et, pour ce faire, elle a pour objet un moteur suralimenté ayant la structure indiquée au premier paragraphe ci-dessus et caractérisé en ce que la turbine basse pression comporte deux entrées reliées l'une à la sortie de la turbine haute pression par un canal primaire et l'autre aux conduits par un canal secondaire, et en ce que des moyens de régulation sont prévus pour empêcher une circulation de gaz d'échappement dans le canal secondaire lorsque le moteur fonctionne à bas régime et/ou à faible charge et pour autoriser cette circulation lorsque le moteur fonctionne à un régime et/ou une charge atteignant ou dépassant un seuil prédéterminé.

Lorsque le moteur selon l'invention fonctionne à bas régime et/ou à faible charge, tous les gaz d'échappement traversent la turbine haute pression avant d'alimenter la turbine basse pression par l'intermédiaire d'une seule entrée.

La totalité du débit de gaz d'échappement traverse donc la turbine haute pression qui peut ainsi être entraînée avec un maximum de puissance.

Par ailleurs, les gaz d'échappement, en pénétrant dans une seule entrée de la turbine basse pression, travaillent avec la plus grande efficacité, cette turbine se comportant comme une turbine de petite taille plus favorable aux faibles débits.

Ainsi, lorsque le moteur selon l'invention fonctionne à bas régime, il est le siège d'une pression de suralimentation supérieure à celle régnant dans un moteur comportant deux étages classiques de turbocompression et est capable de développer un couple supérieur à celui fourni par ce dernier.

On notera par ailleurs qu'en régime transitoire, c'est-à-dire lors d'une reprise de charge à bas régime, les étages de suralimentation du moteur selon l'invention entrent plus rapidement en action et permettent une augmentation sensible des capacités dynamiques de la machine ou du véhicule entraîné(e) par ce dernier.

Lorsque le moteur selon l'invention fonctionne à un régime et/ou une charge atteignant ou dépassant un seuil prédéterminé, les moyens de régulation permettent à une fraction des gaz d'échappement d'emprunter le canal secondaire pour alimenter directement la deuxième entrée, non utilisée à bas régime, de la turbine basse pression.

Le moteur selon l'invention peut donc fonctionner avec une turbine haute pression non saturée et rester performant à haut régime et/ou à charge élevée.

De préférence, la turbine haute pression comprend une deuxième entrée tandis que les conduits sont regroupés de manière à constituer deux collecteurs indépendants aboutissant chacun à une entrée de la turbine haute pression, les moyens de régulation empêchant les deux entrées de la turbine haute pression de communiquer avec ledit canal secondaire lorsque le moteur fonctionne à bas régime et/ou à faible charge et les autorisant à communiquer avec le canal secondaire lorsque le moteur fonctionne à un régime et/ou une charge atteignant ou dépassant le seuil prédéterminé.

Grâce à ces deux entrées, qui sont alimentées par des courants de gaz d'échappement fortement pulsés en raison de la division du volume des conduits en deux collecteurs, la turbine haute pression peut mieux récupérer l'énergie des gaz d'échappement et être par conséquent plus puissante à bas régime.

Avantageusement, l'un au moins des deux collecteurs peut comprendre au moins deux conduits respectivement reliés à deux cylindres intervenant successivement au sein du cycle de fonctionnement du moteur.

Cette disposition permet d'amplifier le caractère pulsé de l'alimentation de la turbine haute pression.

Ainsi, au moins deux bouffées de gaz provenant de deux cylindres consécutifs au sein du cycle de fonctionnement du moteur sont dirigées dans au moins une entrée de la turbine haute pression.

Or, comme ces deux bouffées se suivent de très près, la pression des gaz dans l'entrée qui les reçoit n'a pas le temps matériel de chuter de façon notable entre leurs introductions respectives.

La pression de la deuxième bouffée vient donc s'ajouter en partie à la pression de la première bouffée qui se trouve encore dans l'entrée concernée, pour atteindre une valeur notablement plus grande.

Le caractère pulsé de l'alimentation est par conséquent amplifié, ce qui permet d'augmenter davantage la puissance de la turbine, et donc du moteur, à bas régime et/ou à faible charge.

Lorsque la turbine haute pression comporte une entrée, les moyens de régulation peuvent comprendre une soupape disposée au niveau d'un orifice reliant cette entrée au canal secondaire, la soupape étant déplaçable entre une position ouverte dans laquelle elle autorise un passage de gaz d'échappement à travers l'orifice et une position fermée dans laquelle elle empêche ce passage.

En revanche, lorsque la turbine haute pression comporte deux entrées, les moyens de régulation peuvent comprendre une soupape disposée au niveau d'un orifice reliant ces deux entrées au canal secondaire, la soupape étant déplaçable entre une position ouverte dans laquelle elle autorise un passage de gaz d'échappement à travers l'orifice et une position fermée dans laquelle elle empêche ce passage.

Dans le mode de réalisation précédent, les moyens de régulation peuvent toutefois comprendre deux soupapes jumelées disposées au niveau de deux orifices reliant chacun une entrée de la turbine haute pression au canal secondaire, ces soupapes étant déplaçables simultanément entre une position ouverte dans laquelle elles autorisent un passage de gaz d'échappement à travers les deux orifices et une position fermée dans laquelle elles empêchent ce passage.

Avantageusement, l'un au moins du canal primaire et du canal secondaire peut être pourvu d'un ensemble de dépollution.

Dans le cas particulier où le canal secondaire comporte un filtre à particules, celui-ci ne nécessite pas de stratégie de régénération propre car la température des gaz d'échappement entrant dans le canal secondaire est en général supérieure à la température d'autorégénération (haut régime et/ou charge élevée).

De préférence, les ensembles de dépollution comprennent un filtre à particules et/ou un catalyseur.

Plusieurs modes d'exécution de la présente invention seront décrits ci-après à titre d'exemples nullement limitatifs en référence aux dessins annexés dans lesquels :
- la figure 1 représente schématiquement un moteur suralimenté comportant quatre cylindres en ligne et deux étages de turbocompression, la turbine haute pression comportant une seule entrée ;
- la figure 2 représente schématiquement et de façon partielle une variante de réalisation du moteur visible sur la figure 1, dans laquelle la turbine haute pression comporte deux entrées ;
- la figure 3 représente schématiquement une variante de réalisation du moteur visible sur la figure 2, dans laquelle les conduits des gaz d'échappement constituent deux collecteurs indépendants reliés chacun à deux cylindres intervenant successivement au sein du cycle de fonctionnement du moteur ;
- la figure 4 représente schématiquement une variante de réalisation du moteur visible sur la figure 3, dans laquelle les canaux primaire et secondaire sont pourvus chacun d'un ensemble de dépollution ;
- la figure 5 est une vue en coupe schématique et partielle réalisée au niveau d'un orifice reliant l'entrée de la turbine haute pression au canal secondaire du moteur visible sur la figure 1, cette vue montrant en position ouverte la soupape disposée au niveau de cet orifice ;
- la figure 6 est une vue en coupe schématique et partielle réalisée au niveau de deux orifices reliant les deux entrées de la turbine haute pression au canal secondaire du moteur visible sur la figure 2 ou sur la figure 3, cette vue montrant en position ouverte les soupapes disposées au niveau de ces deux orifices ; et
- la figure 7 est une vue en coupe analogue à celle de la figure 6 mais dans laquelle les deux entrées de la turbine haute pression sont reliées au canal secondaire par un orifice unique au niveau duquel est prévu une soupape.

Le moteur représenté sur la figure 1 comprend quatre cylindres en ligne 1, 2, 3, 4, deux étages de turbocompression A, B comportant le premier une turbine haute pression 5 et le second une turbine basse pression 6, et des conduits 1a, 2a, 3a, 4a destinés à transférer dans la turbine haute pression 5 les gaz provenant des soupapes d'échappement des cylindres.

L'étage de turbocompression A comporte un compresseur 7 solidaire en rotation de la turbine haute pression 5 et dont la sortie est reliée à une tubulure 8 aboutissant à un répartiteur d'air 9, lui-même relié aux soupapes d'admission des cylindres 1, 2, 3, 4.

L'étage de turbocompression B comporte quant à lui un compresseur 10 solidaire en rotation de la turbine basse pression 6 et dont l'entrée est reliée à un filtre à air 11 par une tubulure 12 tandis que sa sortie est reliée au compresseur 7 de l'étage de turbocompression A par l'intermédiaire d'une tubulure 13.

La turbine haute pression 5 et la turbine basse pression 6 sont montées en série.

La turbine haute pression 5 comporte une entrée 14 reliée aux conduits 1a, 2a, 3a, 4a par une tubulure 15.

La turbine basse pression 6 comporte quant à elle deux entrées 16, 17 reliées la première à la sortie 18 de la turbine haute pression 5 par un canal primaire 19 et la seconde aux conduits 1a, 2a, 3a, 4a par un canal secondaire 20 qui, dans l'exemple représenté, débouche dans l'entrée 14 de la turbine haute pression 5.

Le canal secondaire 20 pourrait toutefois déboucher dans la tubulure 15 ou dans l'un des conduits 1a, 2a, 3a ou 4a sans que l'on sorte pour autant du cadre de la présente invention. A sa sortie, la turbine basse pression est par ailleurs reliée à une tubulure 21 débouchant dans l'atmosphère.

Le moteur représenté sur la figure 1 comprend également des moyens de régulation 22 destinés à empêcher une circulation de gaz d'échappement dans le canal secondaire 20 lorsqu'il fonctionne à bas régime et/ou à faible charge et à autoriser cette circulation lorsqu'il fonctionne à un régime et/ou une charge atteignant ou dépassant un seuil prédéterminé.

Les moyens de régulation 22 qui sont visibles sur la figure 5 comprennent une soupape 23 disposée au niveau d'un orifice 24 reliant l'entrée 14 de la turbine haute pression 5 au canal secondaire 20.

La soupape 23 est déplaçable entre une position fermée dans laquelle elle interdit une circulation de gaz d'échappement dans le canal secondaire 20 lorsque le moteur fonctionne à bas régime et/ou à faible charge, et une position ouverte (visible sur la figure 5) dans laquelle elle permet à une fraction des gaz d'échappement de se diriger dans le canal secondaire 20 lorsque le moteur fonctionne à un régime et/ou une charge atteignant ou dépassant le seuil prédéterminé.

Ainsi, lorsque le moteur fonctionne à bas régime et/ou à faible charge, tous les gaz d'échappement traversent la turbine haute pression 5 et empruntent le canal primaire 19 pour pénétrer dans l'entrée 16 de la turbine basse pression 6.

Celle-ci se comporte alors comme une turbine de petite taille, ce qui est favorable au fonctionnement du moteur à bas régime et/ou à faible charge.

En revanche, lorsque le moteur fonctionne à un régime et/ou une charge atteignant ou dépassant le seuil déterminé, une fraction des gaz d'échappement emprunte le canal secondaire 20, de sorte que les deux entrées 16, 17 de la turbine basse pression 5 sont alimentées.

La dérivation d'une fraction des gaz d'échappement dans le canal secondaire évite une saturation de la turbine haute pression 5 qui affecterait le fonctionnement du moteur et apporte de manière optimale un surplus de puissance à la turbine basse pression.

Le moteur représenté de façon partielle sur la figure 2 comporte un certain nombre de différences par rapport au moteur qui vient d'être décrit en référence à la figure 1.

En effet, la turbine haute pression 5 comprend maintenant deux entrées 14 et 14a tandis que les conduits 1a, 2a, 3a, 4a sont regroupés deux par deux de façon à constituer deux collecteurs indépendants C_{1,4} et C_{2,3} aboutissant le premier à l'entrée 14 et le second à l'entrée 14a.

Par ailleurs, les moyens de régulation 22 qui sont représentés sur la figure 6 comprennent deux soupapes jumelées 23a disposées au niveau de deux orifices 24a reliant les entrées 14, 14a de la turbine haute pression 5 au canal secondaire 20.

Les soupapes 23a sont déplaçables simultanément entre une position fermée dans laquelle elles interdisent une circulation de gaz d'échappement dans le canal secondaire 20 lorsque le moteur fonctionne à bas régime et/ou à faible charge, et une position ouverte (visible sur la figure 6) dans laquelle elles permettent à une fraction des gaz d'échappement de se diriger dans le canal secondaire 20 lorsque le moteur fonctionne à un régime et/ou une charge atteignant ou dépassant le seuil prédéterminé.

Lorsque le moteur fonctionne à bas régime et/ou à faible charge, les gaz d'échappement pénètrent dans les entrées 14, 14a de la turbine haute pression 5 en formant deux courants fortement pulsés du fait de la présence des collecteurs C_{1,4} et C_{2,3} qui divisent le volume des conduits 1a, 2a, 3a, 4a.

Comme les gaz d'échappement pénètrent sous forme pulsée dans la turbine haute pression, celle-ci peut mieux récupérer leur énergie et être par conséquent plus performante.

Le moteur représenté de façon partielle sur la figure 3 diffère du moteur décrit en référence à la figure 2 en ce que les cylindres 1, 2 sont regroupés sous la forme d'un collecteur C_{1,2} relié à l'entrée 14 de la turbine haute pression, tandis que les cylindres 3,4 sont regroupés sous la forme d'un collecteur C_{3,4} relié à l'entrée 14a de ladite turbine haute pression.

Comme l'injection dans ce moteur est assurée suivant l'ordre classique 1-3-4-2, les cylindres 2,1 d'une part et les cylindres 3, 4 d'autre part interviennent successivement au sein du cycle de fonctionnement du moteur.

Les collecteurs C_{1,2} et C_{3,4} dirigent par conséquent dans chacune des entrées 14, 14a de la turbine haute pression, deux bouffées de gaz successives, ce qui a l'avantage d'amplifier le caractère pulsé de l'alimentation de la turbine haute pression et d'augmenter par conséquent la puissance du moteur à bas régime et/ou à faible charge.

Le moteur représenté sur la figure 4 diffère du moteur décrit en référence à la figure 3 en ce que les canaux primaire 19 et secondaire 20 sont pourvus chacun d'un ensemble de dépollution 25 comprenant par exemple un filtre à particules et/ou un catalyseur.

On notera toutefois que ce moteur pourrait ne comporter qu'un seul ensemble de dépollution 25 disposé soit dans le canal primaire 19, soit dans le canal secondaire 20.

Dans les moteurs représentés sur les figures 2 à 4, les moyens de régulation 22 comprennent deux soupapes jumelées 23a disposées au niveau de deux orifices 24a reliant les entrées 14, 14a de la turbine haute pression 5 au canal secondaire 20, comme représenté sur la figure 6.

Ces moyens pourraient toutefois comprendre une soupape unique 23b disposée au niveau d'un orifice 24b reliant les entrées 14, 14a au canal secondaire 20, comme représenté sur la figure 7.

Dans ce mode de réalisation particulier, la soupape 23b est déplaçable entre une position fermée dans laquelle une circulation de gaz d'échappement dans le canal secondaire 20 est rendue impossible lorsque le moteur fonctionne à bas régime et/ou à faible charge, et une position ouverte (visible sur la figure 7) dans laquelle une fraction des gaz d'échappement peut circuler dans le canal secondaire lorsque le moteur fonctionne à un régime et/ou une charge atteignant ou dépassant un seuil prédéterminé.

## Revendications

1. Moteur suralimenté comprenant plusieurs cylindres (1,2,3,4), au moins deux étages de turbocompression (A,B) comportant respectivement une turbine haute pression (5) et une turbine basse pression (6) montées en série, et des conduits (1a, 2a, 3a, 4a) pour transférer dans la turbine haute pression les gaz d'échappement provenant des cylindres, la turbine haute pression comportant une entrée (14) reliée aux conduits, **caractérisé en ce que** la turbine basse pression (6) comporte deux entrées (16,17) reliées l'une à la sortie (18) de la turbine haute pression (5) par un canal primaire (19) et l'autre aux conduits (1a, 2a, 3a, 4a) par un canal secondaire (20), et **en ce que** des moyens de régulation (22) sont prévus pour empêcher une circulation de gaz d'échappement dans le canal secondaire (20) lorsque le moteur fonctionne à bas régime et/ou à faible charge et pour autoriser cette circulation lorsque le moteur fonctionne à un régime et/ou une charge atteignant ou dépassant un seuil prédéterminé.

2. Moteur suralimenté selon la revendication 1, **caractérisé en ce que** la turbine haute pression (5) comprend une deuxième entrée (14a), **en ce que** les conduits (1a, 2a, 3a, 4a) sont regroupés de manière à constituer deux collecteurs indépendants (C_{1,4}, C_{2,3} ; C_{1,2}, C_{3,4}) aboutissant chacun à une entrée de la turbine haute pression (5), et **en ce que** les moyens de régulation (22) empêchent les deux entrées (14,14a) de la turbine haute pression de communiquer avec le canal secondaire (20) lorsque le moteur fonctionne à bas régime et/ou à faible charge et les autorisent à communiquer avec le canal secondaire lorsque le moteur fonctionne à un régime et/ou une charge atteignant ou dépassant le seuil prédéterminé.

3. Moteur selon la revendication 2, **caractérisé en ce que** l'un au moins des deux collecteurs (C_{1,2} , C_{3,4}) comprend au moins deux conduits (1a, 2a ; 3a, 4a) respectivement reliés à deux cylindres (1,2 ; 3,4) intervenant successivement au sein du cycle de fonctionnement du moteur.

4. Moteur selon la revendication 1, **caractérisé en ce que** les moyens de régulation (22) comprennent une soupape (23) disposée au niveau d'un orifice (24) reliant l'entrée (14) de la turbine haute pression (5) au canal secondaire (20), cette soupape étant déplaçable entre une position ouverte dans laquelle elle autorise un passage de gaz d'échappement à travers l'orifice (24) et une position fermée dans laquelle elle empêche ce passage.

5. Moteur selon la revendication 2 ou 3, **caractérisé en ce que** les moyens de régulation (22) comprennent une soupape (23b) disposée au niveau d'un orifice (24b) reliant les deux entrées (14, 14a) de la turbine haute pression (5) au canal secondaire (20), cette soupape étant déplaçable entre une position ouverte dans laquelle elle autorise un passage de gaz d'échappement à travers l'orifice (24b) et une position fermée dans laquelle elle empêche ce passage.

6. Moteur selon la revendication 2 ou 3, **caractérisé en ce que** les moyens de régulation (22) comprennent deux soupapes jumelées (23a) disposées au niveau de deux orifices (24a) reliant chacun une entrée (14;14a) de la turbine haute pression (5) au canal secondaire (20), ces soupapes étant déplaçables simultanément entre une position ouverte dans laquelle elles autorisent un passage de gaz d'échappement à travers les deux orifices (24a) et une position fermée dans laquelle elles empêchent ce passage.

7. Moteur selon l'une quelconque des revendications précédentes, **caractérisé en ce que** le canal primaire (19) est pourvu d'un ensemble de dépollution (25).

8. Moteur selon l'une quelconque des revendications précédentes, **caractérisé en ce que** le canal secondaire (20) est pourvu d'un ensemble de dépollution (25).

9. Moteur selon les revendications 7 et 8, **caractérisé en ce que** les ensembles de dépollution (25) comprennent un filtre à particules et/ou un catalyseur.

## Claims

1. A supercharged engine, comprising several cylinders (1, 2, 3, 4), at least two turbocharger stages (A, B) comprising a high-pressure turbine (5) and a low-pressure turbine (6), respectively, which are connected in series, and pipes (1a, 2a, 3a, 4a) for transferring the exhaust gas from the cylinders to the high-pressure turbine, said high-pressure turbine having an inlet (14) connected to the pipes, **characterized in that** the low-pressure turbine (6) comprises two inlets (16, 17), one of which is connected to the outlet (18) of the high-pressure turbine (5) by a primary passage (19), while the other one is connected to the pipes (1a, 2a, 3a, 4a) by a secondary passage (20), and **in that** regulator means (22) are provided so as to preclude a flow of exhaust gas inside the secondary passage (20) when the engine is running at a low speed and/or at a low load, and to permit such flow when the engine is running at a speed and/or at a load reaching or exceeding a predetermined threshold value.

2. The supercharged engine according to claim 1, **characterized in that** the high-pressure turbine (5) comprises a second inlet (14a), **in that** the pipes (1a, 2a, 3a, 4a) are grouped so as to form two independent manifolds (C_{1,4}, C_{2,3} ; C_{1,2}, C₃,₄), each of them leading into an inlet of the high-pressure turbine (5), and **in that** the regulator means (22) keep both inlets (14, 14a) of the high-pressure turbine from communicating with the secondary passage (20) when the engine is running at a low speed and/or at a low load, and allow them to communicate with the secondary passage when the engine is running at a speed and/or at a load reaching or exceeding the predetermined threshold value.

3. The supercharged engine according to claim 2, **characterized in that** at least one of said manifolds (C_{1,2}, C₃,₄) comprises at least two pipes (1a, 2a ; 3a, 4a) connected to two cylinders (1, 2 ; 3, 4) respectively, which are involved in turn in the course of the operating cycle of the engine.

4. The supercharged engine according to claim 1, **characterized in that** the regulator means (22) comprise a valve (23), which is disposed at a port (24) connecting the inlet (14) of the high-pressure turbine (5) with the secondary passage (20), said valve being movable between an open position, in which it permits an exhaust-gas flow through the port (24), and a closed position in which such flow is precluded.

5. The supercharged engine according to claim 2 or 3, **characterized in that** the regulator means (22) comprise a valve (23b), which is disposed at a port (24b) connecting both inlets (14, 14a) of the high-pressure turbine (5) with the secondary passage (20), said valve being movable between an open position, in which it permits an exhaust-gas flow through the port (24b), and a closed position in which such flow is precluded.

6. The supercharged engine according to claim 2 or 3, **characterized in that** the regulator means (22) comprise two twinned valves (23a) arranged at two ports (24a) connecting each an inlet (14 ; 14a) of the high-pressure turbine (5) with the secondary passage (20), said valves being movable at the same time between an open position, in which they permit an exhaust-gas flow through both ports (24a), and a closed position in which such flow is precluded.

7. The supercharged engine according to any of the preceding claims, **characterized in that** the primary passage (19) is provided with a depollution unit (25).

8. The supercharged engine according to any of the preceding claims, **characterized in that** the secondary passage (20) is provided with a depollution unit (25).

9. The supercharged engine according to claims 7 and 8, **characterized in that** the depollution units (25) comprise a particulate filter and/or a catalyst.

## Patentansprüche

1. Ladermotor, umfassend mehrere Zylinder (1, 2, 3, 4), wenigstens zwei Turboaufladungsstufen (A, B), die eine Hochdruckturbine (5) bzw. eine Niederdruckturbine (6), die in Reihe montiert sind, umfassen, und Leitungen (1a, 2a, 3a, 4a), um die von den Zylindern kommenden Abgase in die Hochdruckturbine weiterzuleiten, wobei die Hochdruckturbine einen mit den Leitungen verbundenen Einlass (14) umfasst, **dadurch gekennzeichnet, dass** die Niederdruckturbine (6) zwei Einlässe (16, 17) umfasst, von denen einer über einen Hauptkanal (19) mit dem Auslass (18) der Hochdruckturbine (5) verbunden ist und der andere über einen Nebenkanal (20) mit den Leitungen (1a, 2a, 3a, 4a) verbunden ist, und dass Regelungseinrichtungen (22) vorgesehen sind, um ein Zirkulieren von Abgas in den Nebenkanal (20) zu verhindern, wenn der Motor mit niedriger Drehzahl und/oder mit schwacher Ladung arbeitet, und um dieses Zirkulieren zuzulassen, wenn der Motor mit einer Drehzahl und/oder mit einer Ladung arbeitet, die einen vorgegebenen Schwellenwert erreichen oder überschreiten.

2. Ladermotor nach Anspruch 1, **dadurch gekennzeichnet, dass** die Hochdruckturbine (5) einen zweiten Einlass (14a) umfasst, dass die Leitungen (1a, 2a, 3a, 4a) so gruppiert sind, dass sie zwei unabhängige Sammelleitungen (C₁, ₄, C_{2,3}; C_{1, 2}, C_{3, 4}) bilden, die jeweils in einen Einlass der Hochdruckturbine (5) münden, und dass die Regelungseinrichtungen (22) die zwei Einlässe (14, 14a) der Hochdruckturbine an der Verbindung mit dem Nebenkanal (20) hindern, wenn der Motor mit niedriger Drehzahl und/oder mit schwacher Ladung arbeitet, und ihre Verbindung mit dem Nebenkanal zulassen, wenn der Motor mit einer Drehzahl und/oder mit einer Ladung arbeitet, die einen vorgegebenen Schwellenwert erreichen oder überschreiten.

3. Motor nach Anspruch 2, **dadurch gekennzeichnet, dass** wenigstens eine der zwei Sammelleitungen (C₁, ₂, C₃, ₄) wenigstens zwei Leitungen (1a, 2a; 3a, 4a) umfassen, die jeweils mit zwei Zylindern (1, 2; 3, 4) verbunden sind, die innerhalb des Arbeitstaktes des Motors aufeinanderfolgend eingreifen.

4. Motor nach Anspruch 1, **dadurch gekennzeichnet, dass** die Regelungseinrichtungen (22) ein Ventil (23) umfassen, das auf Höhe einer Öffnung (24), die den Einlass (14) der Hochdruckturbine (5) mit dem Nebenkanal (20) verbindet, angeordnet ist, wobei dieses Ventil zwischen einer offenen Position, in der es ein Durchströmen des Abgases durch die Öffnung (24) hindurch zulässt, und einer geschlossenen Position, in der es dieses Durchströmen verhindert, verschoben werden kann.

5. Motor nach Anspruch 2 oder 3, **dadurch gekennzeichnet, dass** die Regelungseinrichtungen (22) ein Ventil (23b) umfassen, das auf Höhe einer Öffnung (24b) angeordnet ist, die die zwei Einlässe (14, 14a) der Hochdruckturbine (5) mit dem Nebenkanal (20) verbindet, wobei dieses Ventil zwischen einer offenen Position, in der es ein Durchströmen des Abgases durch die Öffnung (24b) hindurch zulässt, und einer geschlossenen Position, in der es dieses Durchströmen verhindert, verschoben werden kann.

6. Motor nach Anspruch 2 oder 3, **dadurch gekennzeichnet, dass** die Regelungseinrichtungen (22) zwei paarweise angeordnete Ventile (23a) umfassen, die auf Höhe von zwei Öffnungen (24a), die jeweils einen Einlass (14; 14a) der Hochdruckturbine (5) mit dem Nebenkanal (20) verbinden, angeordnet sind, wobei diese Ventile simultan zwischen einer offenen Position, in der sie ein Durchströmen des Abgases durch die zwei Öffnungen (24a) hindurch zulassen, und einer geschlossenen Position, in der sie dieses Durchströmen verhindern, verschoben werden können.

7. Motor nach einem der vorhergehenden Ansprüche, **dadurch gekennzeichnet, dass** der Hauptkanal (19) mit einer Abgasreinigungseinheit (25) versehen ist.

8. Motor nach einem der vorhergehenden Ansprüche, **dadurch gekennzeichnet, dass** der Nebenkanal (20) mit einer Abgasreinigungseinheit (25) versehen ist.

9. Motor nach den Ansprüchen 7 und 8, **dadurch gekennzeichnet, dass** die Abgasreinigungseinheiten (25) ein Rußpartikelfilter und/oder einen Katalysator umfassen.
